# FASCICULE DE BREVET EUROPEEN

(11) **EP 1 041 226 B1**
(45) Date de publication et mention de la délivrance du brevet: **25.02.2004**
(21) Numéro de dépôt: 00400890.0
(22) Date de dépôt: 31.03.2000
(51) Int. Cl.: E05B 49/00, B60R 25/00

(54) **Dispositif pour sécuriser un système d'accès equipé d'un moyen d'identification et d'un identifiant, pour un véhicule automobile**
Vorrichtung zum Sichern eines mit einem Identifizierungsmittel und einem Identifizierer ausgerüsteten Zugangssystems für Kraftfahrzeuge
Device for securing a motor vehicle access system equipped with identification means and an identifier

(30) Priorité: 02.04.1999 FR 9904149
(43) Date de publication de la demande: 04.10.2000
(73) Titulaire: VALEO SECURITE HABITACLE S.A.S., 94042 Créteil Cédex (FR)
(72) Inventeur: Baudard, Xavier, 75016 Paris (FR); Haydar, Aham, 93230 Romainville (FR)
(74) Mandataire: Hervouet, Sylvie

(56) Documents cités:
- EP-A- 0 596 805
- DE-C- 19 735 658
- DE-C- 19 738 323

## Description

La présente invention concerne un dispositif pour sécuriser un système d'accès dit "mains libres" pour un véhicule automobile, comportant un moyen d'identification installé sur le véhicule et au moins un identifiant porté par l'utilisateur.

Dans un tel système, un échange à distance de données s'établit entre le moyen d'identification et l'identifiant pour commander les moyens de verrouillage des ouvrants du véhicule, lorsque le moyen d'identification a authentifié l'identifiant. Dans ce type de système, l'utilisateur, pour obtenir l'accès, doit, tout d'abord, faire débuter une opération d'identification. Le démarrage de l'opération peut être obtenu, par exemple, par action sur un bouton de commande situé sur l'ouvrant, ou par une commande à distance, ou éventuellement par un détecteur de présence installé dans l'habitacle du véhicule.

Toutefois, un même moyen d'identification est généralement associé à plusieurs identifiants destinés à plusieurs utilisateurs, de sorte qu'il est possible qu'un utilisateur quitte le véhicule avec un identifiant, ce qui provoque le verrouillage du véhicule, alors qu'un autre identifiant est laissé dans le véhicule. Dans ce cas, si un voleur pénètre par effraction dans le véhicule, il peut prendre possession de l'identifiant laissé dans le véhicule, cet identifiant pouvant permettre le démarrage du véhicule.

Le document DE-C-197 35658 décrit un système de contrôle d'accès dans lequel, une commande installée dans le véhicule envoie après un ordre de verrouillage, un signal de contrôle pour vérifier si des transpondeurs se trouvent encore dans l'habitacle du véhicule, les transpondeurs reconnus se trouvant à l'intérieur du véhicule, étant enregistrés dans une mémoire affectée à ladite commande, de façon que ladite commande puisse bloquer tous les transpondeurs ainsi enregistrés, lorsque le dispositif de surveillance du véhicule reconnaît un accès non régulier au véhicule.

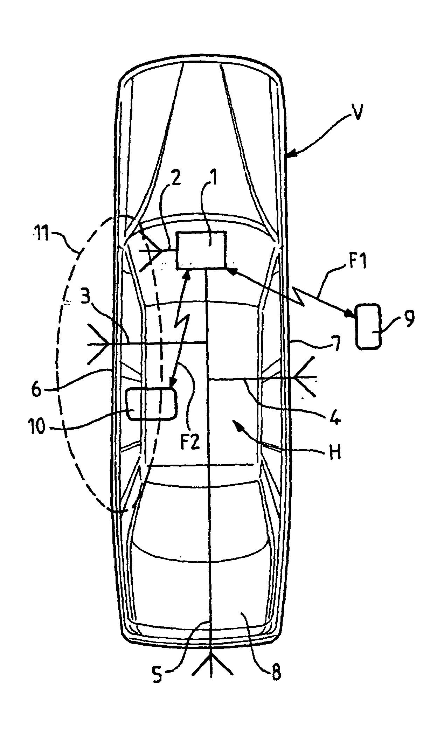

Sur la figure unique du dessin annexé, on a représenté un véhicule V qui comporte une unité électronique de gestion principale 1 incorporant un moyen d'identification et reliée à une pluralité d'antennes 2 à 5. L'antenne 2 est agencée à l'intérieur de l'habitacle H du véhicule et présente une zone de couverture qui s'étend sensiblement dans tout l'habitacle. Les antennes 3 et 4 sont extérieures à l'habitacle du véhicule et situées par exemple dans les poignées de portières latérales 6, 7. L'antenne 5 est également extérieure à l'habitacle et s'étend vers l'arrière du véhicule, sensiblement au niveau du hayon de coffre 8. Le moyen d'identification comporte un émetteur en basse fréquence et un récepteur en radio fréquence, pour permettre d'échanger des données avec plusieurs identifiants, par exemple les identifiants 9, 10.

Dans ce cas, si on suppose que l'identifiant 10 est laissé à l'intérieur de l'habitacle H du véhicule V, lorsque l'utilisateur portant l'identifiant 9 quitte le véhicule, celui-ci se verrouille sous la commande de l'unité centrale 1, grâce à l'échange d'informations effectué avec l'identifiant 9, comme matérialisé par la flèche F1. Le début du dialogue entre l'identifiant 9 et l'unité centrale peut être provoqué par la fermeture d'une portière ou bien par bouton de télécommande sur le boîtier 9. Dans ce cas, conformément au principe du document allemand précité, l'unité centrale 1 envoie un signal de contrôle, matérialisé par la flèche F2 à l'intérieur de l'habitacle H, pour détecter la présence de l'identifiant 10, et ce dernier est mémorisé dans l'unité centrale 1.

Toutefois, si une personne ne portant pas l'identifiant autorisé saisit la poignée d'une portière du véhicule, que ce soit par erreur ou par malveillance, l'unité centrale 1 émet en réponse un signal d'interrogation qui est envoyé à l'extérieur du véhicule notamment par l'intermédiaire de l'antenne 3. Etant donné que cette personne ne porte pas d'identifiant autorisé, le véhicule ne devrait pas pouvoir se déverrouiller. Cependant, comme la zone de couverture 11 de l'antenne 3 s'étend également légèrement vers l'intérieur de l'habitacle, comme visible sur la figure du dessin annexé, du fait de la présence des vitres sur les portières, il peut arriver que l'identifiant 10 soit dans la zone de couverture 11 de l'antenne 3 et puisse ainsi répondre à l'unité centrale 1 pour déclencher le déverrouillage du véhicule, alors qu'aucun utilisateur autorisé n'est à proximité du véhicule. Ce cas peut survenir lorsqu'un identifiant est laissé par exemple dans le compartiment intérieur d'une portière.

L'invention a pour but d'éliminer l'inconvénient précité et de proposer un dispositif pour sécuriser un système d'accès dit "mains libres" pour un véhicule automobile, qui soit simple et efficace.

A cet effet, l'invention a pour objet un dispositif pour sécuriser un système d'accès dit "mains libres" pour un véhicule automobile, ledit système comportant un moyen d'identification installé sur le véhicule et apte à commander des moyens de verrouillage des ouvrants du véhicule, et au moins un identifiant destiné à être porté par un utilisateur et apte à établir un échange à distance de données avec le moyen d'identification pour commander les moyens de verrouillage, lorsque le moyen d'identification a authentifié l'identifiant, ledit moyen d'identification étant destiné, après un ordre de verrouillage, à envoyer dans l'habitacle du véhicule un signal d'interrogation et à recevoir en réponse un signal de présence de chaque identifiant qui est encore présent dans l'habitacle, caractérisé par le fait que, lorsqu'un signal de présence est reçu par le moyen d'identification, ce dernier envoie dans l'habitacle un signal d'inhibition qui est reçu et mémorisé par chaque identifiant présent dans l'habitacle.

En outre, lorsque l'utilisateur portant un identifiant est dans le véhicule et verrouille de l'intérieur les portières du véhicule, par exemple lorsqu'il traverse des zones malfamées, il est également nécessaire d'éviter qu'une personne non autorisée puisse déverrouiller le véhicule simplement en actionnant la poignée extérieure de la portière, si l'identifiant porté par l'utilisateur se trouve accidentellement dans la zone de couverture de l'antenne extérieure de portière.

A cet effet, lorsque l'ordre de verrouillage est commandé de l'intérieur de l'habitacle du véhicule, le moyen d'identification est destiné à envoyer un signal d'inhibition pour inhiber chaque identifiant présent dans l'habitacle, uniquement vis-à-vis d'un échange d'informations autorisant le déverrouillage. Autrement dit, l'identifiant pourra toujours dialoguer avec le moyen d'identification pour permettre le démarrage du véhicule, mais n'autorisera plus le déverrouillage automatique. A titre d'exemple, un bouton intérieur peut être prévu pour la condamnation centralisée des portières, à partir de l'habitacle.

Selon encore une autre caractéristique, le moyen d'identification est apte à commander un moyen d'anti-démarrage du véhicule et au moins un identifiant est apte à établir un échange de données avec le moyen d'identification pour commander ledit moyen d'anti-démarrage, lorsque l'identifiant a été authentifié, le dispositif étant caractérisé par le fait que, lorsque l'ordre de verrouillage a été commandé de l'extérieur du véhicule, le moyen d'identification est apte à envoyer un signal d'inhibition pour inhiber chaque identifiant présent dans l'habitacle du véhicule, vis-à-vis du déverrouillage et/ou du démarrage du véhicule.

Dans une première forme de réalisation, le signal d'interrogation et le signal d'inhibition sont émis en basse fréquence.

Selon une autre caractéristique, le signal de présence de l'identifiant est émis en haute fréquence, voire en radiofréquence.

Avantageusement, le signal d'interrogation est émis par le moyen d'identification, après que l'unité centrale du véhicule ait reçu la confirmation de l'état verrouillé des ouvrants.

Selon encore une autre caractéristique, après un ordre de déverrouillage, le moyen d'identification est destiné à envoyer à nouveau un signal d'interrogation à l'intérieur de l'habitacle et à recevoir en réponse un signal de présence de chaque identifiant préalablement inhibé et encore présent dans l'habitacle, ledit moyen d'identification étant apte à émettre un signal d'activation, lorsqu'un signal de présence est reçu, pour effacer l'ordre d'inhibition dans la mémoire de chaque identifiant détecté comme présent dans l'habitacle.

Pour mieux faire comprendre l'objet de l'invention, on va en décrire maintenant à titre d'exemple purement illustratif et non limitatif, un mode de réalisation représenté sur le dessin annexé. Ce dessin comporte une figure unique représentant schématiquement en vue de dessus un véhicule automobile équipé du dispositif selon l'invention.

Lorsqu'un utilisateur portant l'identifiant 9 quitte le véhicule en laissant un autre identifiant 10 dans l'habitacle H, et referme les portières 6, 7, l'unité centrale de gestion 1 détecte la fermeture des portières et provoque l'émission par le moyen d'identification d'un signal d'interrogation vers l'identifiant 9, par l'intermédiaire des antennes extérieures 3 à 5. Lorsque l'identifiant 9 quitte la zone de couverture des antennes extérieures, le moyen d'identification du véhicule ne reçoit plus de signal en réponse de l'identifiant 9, ce qui provoque le verrouillage du véhicule.

L'unité centrale 1 commande alors l'envoi d'un signal d'interrogation à l'intérieur de l'habitacle du véhicule, par l'intermédiaire par exemple de l'antenne interne 2. L'identifiant 10 se trouvant à l'intérieur de l'habitacle est réveillé par le signal d'interrogation provenant de l'antenne 2 et émet un signal de présence en réponse, comme matérialisé par la flèche F2. L'unité centrale 1 recevant un signal de présence à l'intérieur de l'habitacle, elle provoque alors l'émission d'un signal d'inhibition, par exemple par l'intermédiaire de l'antenne interne 2, qui est reçu par l'identifiant 10, ce dernier mémorisant alors l'ordre d'inhibition provenant de l'unité centrale 1. Ainsi, même si l'identifiant 10 se trouve dans la zone de couverture 11 de l'antenne extérieure 3, et qu'une personne non autorisée actionne la poignée extérieure de portière, l'identifiant 10 ne pourra pas répondre au signal d'interrogation émis par l'antenne 3, car l'identifiant 10 aura été préalablement inhibé vis-à-vis de l'accès au véhicule.

Lorsqu'un utilisateur autorisé portant l'identifiant 9 s'approche du véhicule V, un dialogue va s'établir avec les moyens d'identification dans l'unité centrale 1, comme matérialisé par la flèche F1, pour commander le déverrouillage du véhicule.

De manière analogue, à la suite de l'ordre de déverrouillage, l'unité centrale 1 envoie un signal d'interrogation, puis un signal d'activation de l'identifiant 10 détecté comme présent dans le véhicule, pour effacer l'ordre d'inhibition dans la mémoire de l'identifiant 10.

Bien que l'invention ait été décrite en liaison avec une variante de réalisation particulière, il est bien évident qu'elle n'y est nullement limitée et qu'elle comprend tous les équivalents techniques des moyens décrits ainsi que ses combinaisons, si celles-ci entrent dans le cadre de l'invention.

## Revendications

1. Dispositif pour sécuriser un système d'accès dit "mains libres" pour un véhicule automobile (V), ledit système comportant un moyen d'identification (1) installé sur le véhicule et apte à commander des moyens de verrouillage des ouvrants (6-8) du véhicule, et au moins un identifiant (9, 10) destiné à être porté par un utilisateur et apte à établir un échange à distance de données avec le moyen d'identification pour commander les moyens de verrouillage, lorsque le moyen d'identification a authentifié l'identifiant, ledit moyen d'identification étant destiné, après un ordre de verrouillage, à envoyer dans l'habitacle (H) du véhicule un signal d'interrogation et à recevoir en réponse un signal de présence de chaque identifiant (10) qui est encore présent dans l'habitacle, **caractérisé par le fait que**, lorsqu'un signal de présence est reçu par le moyen d'identification (1), ce dernier envoie dans l'habitacle un signal d'inhibition qui est reçu et mémorisé par chaque identifiant (10) présent dans l'habitacle (H).

2. Dispositif selon la revendication 1, **caractérisé par le fait que**, lorsque l'ordre de verrouillage est commandé de l'intérieur de l'habitacle (H) du véhicule, le moyen d'identification (1) est destiné à envoyer un signal d'inhibition pour inhiber chaque identifiant (10) présent dans l'habitacle, uniquement vis-à-vis d'un échange d'informations autorisant le déverrouillage.

3. Dispositif selon la revendication 1 ou 2, dans lequel le moyen d'identification (1) est apte à commander un moyen d'anti-démarrage du véhicule (V) et au moins un identifiant est apte à établir un échange de données avec le moyen d'identification pour commander ledit moyen d'anti-démarrage, lorsque l'identifiant a été authentifié, **caractérisé par le fait que**, lorsque l'ordre de verrouillage a été commandé de l'extérieur du véhicule, le moyen d'identification (1) est apte à envoyer un signal d'inhibition pour inhiber chaque identifiant (10) présent dans l'habitacle du véhicule, vis-à-vis du déverrouillage et/ou du démarrage du véhicule.

4. Dispositif selon l'une des revendications 1 à 3, **caractérisé par le fait que** le signal d'interrogation et le signal d'inhibition sont émis en basse fréquence.

5. Dispositif selon l'une des revendications 1 à 4, **caractérisé par le fait que** le signal de présence de l'identifiant est émis en haute fréquence, voire en radiofréquence.

6. Dispositif selon l'une des revendications 1 à 5, **caractérisé par le fait que** le signal d'interrogation est émis par le moyen d'identification (1), après que l'unité centrale du véhicule (V) ait reçu la confirmation de l'état verrouillé des ouvrants (6-8).

7. Dispositif selon l'une des revendications 1 à 6, **caractérisé par le fait qu'**après un ordre de déverrouillage, le moyen d'identification (1) est destiné à envoyer à nouveau un signal d'interrogation à l'intérieur de l'habitacle (H) et à recevoir en réponse un signal de présence de chaque identifiant (10) préalablement inhibé et encore présent dans l'habitacle, ledit moyen d'identification étant apte à émettre un signal d'activation, lorsqu'un signal de présence est reçu, pour effacer l'ordre d'inhibition dans la mémoire de chaque identifiant détecté comme présent dans l'habitacle.

## Patentansprüche

1. Vorrichtung zur Absicherung eines sogenannten Freihandzugangssystems für ein Kraftfahrzeug (V), wobei das genannte System ein Identifikationsmittel (1), das am Fahrzeug installiert ist und Mittel zum Verriegeln der Fahrzeugtüren (6 - 8) steuern kann, und zumindest einen Identifizierer (9, 10) enthält, der dazu bestimmt ist, von einem Benutzer mitgeführt zu werden, und einen Datenaustausch über eine Entfernung mit dem Identifikationsmittel aufbauen kann, um die Verriegelungsmittel dann zu betätigen, wenn das Identifikationsmittel den Identifizierer authentifiziert hat, wobei das genannte Identifikationsmittel dazu bestimmt ist, nach einem Verriegelungsbefehl ein Abfragesignal in den Fahrgastraum (H) des Fahrzeugs zu senden und in Antwort ein Anwesenheitssignal von jedem Identifizierer (10) zu empfangen, der sich noch im Fahrgastraum befindet, **dadurch gekennzeichnet, dass** dann, wenn ein Anwesenheitssignal durch das Identifikationsmittel (1) empfangen wird, dieses ein Hemmsignal in den Fahrgastraum sendet, das von jedem im Fahrgastraum (H) vorhandenen Identifizierer (10) empfangen und gespeichert wird.

2. Vorrichtung nach Anspruch 1, **dadurch gekennzeichnet, dass** dann, wenn der Verrieglungsbefehl von innerhalb des Fahrgastraums (H) des Fahrzeugs aus gegeben wird, das Identifikationsmittel (1) dazu bestimmt ist, ein Hemmsignal auszusenden, um jeden im Fahrgastraum vorhandenen Identifizierer (10) nur gegenüber einem die Entriegelung gestattenden Datenaustausch zu hemmen.

3. Vorrichtung nach Anspruch 1 oder 2, bei dem das Identifikationsmittel (1) ein Startblockiermittel des Fahrzeugs (V) steuern kann und zumindest ein Identifizierer einen Datenaustausch mit dem Identifikationsmittel aufbauen kann, um das genannte Startblockiermittel zu steuern, wenn der Identifizierer authentifiziert wurde, **dadurch gekennzeichnet, dass** dann, wenn der Verriegelungsbefehl von außerhalb des Fahrzeugs gegeben wurde, das Identifikationsmittel (1) ein Hemmsignal aussenden kann, um jeden im Fahrgastraum des Fahrzeugs vorhandenen Identifizierer (10) gegenüber der Entriegelung und/oder dem Start des Fahrzeugs zu hemmen.

4. Vorrichtung nach einem der Ansprüche 1 bis 3, **dadurch gekennzeichnet, dass** das Abfragesignal und das Hemmsignal mit Niederfrequenz ausgegeben werden.

5. Vorrichtung nach einem der Ansprüche 1 bis 4, **dadurch gekennzeichnet, dass** das Anwesenheitssignal des Identifizierers mit Hochfrequenz bzw. Radiofrequenz ausgegeben wird.

6. Vorrichtung nach einem der Ansprüche 1 bis 5, **dadurch gekennzeichnet, dass** das Abfragesignal vom Identifikationsmittel (1) ausgegeben wird, nachdem die Zentraleinheit des Fahrzeugs (V) die Bestätigung über den verriegelten Zustand der Türen (6 - 8) erhalten hat.

7. Vorrichtung nach einem der Ansprüche 1 bis 6, **dadurch gekennzeichnet, dass** nach einem Entriegelungsbefehl das Identifikationsmittel (1) dazu bestimmt ist, erneut ein Abfragesignal ins Innere des Fahrgastraums (H) auszusenden und in Antwort ein Anwesenheitssignal von jedem Identifizierer (10) zu empfangen, der zuvor gehemmt wurde und noch im Fahrgastraum vorhanden ist, wobei das genannte Identifikationsmittel ein Aktivierungssignal ausgeben kann, wenn ein Anwesenheitssignal empfangen wird, um den Hemmbefehl im Speicher eines jeden Identifizierers zu löschen, der als im Fahrgastraum anwesend erfasst wurde.

## Claims

1. Security apparatus for a "hands-free" access system for a motor vehicle (V), the said system comprising at least one identification means (1) installed on the vehicle and adapted to control means for locking opening elements (6 - 8) of the vehicle, and at least one identifier (9, 10) adapted to be carried by a user and arranged to establish remote data exchange with the identification means, whereby to control the locking means, when the identification means has authenticated the identifier, the said identification means being adapted so that, after an order for locking, it transmits an interrogation signal into the cabin (H) of the vehicle and receives in response a presence signal for each identifier (10) still present in the cabin, **characterised by** the fact that, when a presence signal is received by the identification means (1), the latter transmits into the cabin an inhibiting signal which is received and memorised by each identifier (10) present in the cabin (H).

2. Apparatus according to Claim 1, **characterised by** the fact that, when the locking order is controlled from inside the cabin (H) of the vehicle, the identification means (1) is adapted to transmit an inhibition signal to inhibit each identifier (10) present in the cabin, only in association with an exchange of information authorising unlocking.

3. Apparatus according to Claim 1 or Claim 2, wherein the identification means (1) is adapted to control an anti-starting means of the vehicle (V), and at least one identifier is adapted to establish an exchange of data with the identification means, for the purpose of controlling the said anti-starting means, when the identifier has been authenticated, **characterised by** the fact that, when the locking order has been commanded from outside the vehicle, the identification means (1) is adapted to transmit an inhibiting signal for inhibiting each identifier (10) present in the cabin of the vehicle, in association with unlocking and/or starting of the vehicle.

4. Apparatus according to one of Claims 1 to 3, **characterised by** the fact that the interrogation signal and the inhibiting signal are emitted at low frequency.

5. Apparatus according to one of Claims 1 to 4, **characterised by** the fact that the presence signal of the identifier is emitted at high frequency, or even at radio frequencies.

6. Apparatus according to one of Claims 1 to 5, **characterised by** the fact that the interrogation signal is emitted by the identification means (1) after the central unit of the vehicle (V) has received confirmation of the locked state of the opening elements (6 - 8).

7. Apparatus according to one of Claims 1 to 6, **characterised by** the fact that, after an order for unlocking, the identification means (1) is adapted to transmit an interrogation signal once again to the interior of the cabin (H), and to receive in response a presence signal from each identifier (10) inhibited beforehand and still present in the cabin, the said identification means being adapted to emit an activation signal when a presence signal is received, whereby to cancel the inhibition order in the memory of each identifier detected as being present in the cabin.
